# EUROPEAN PATENT APPLICATION

(11) **EP 2 660 701 A1**
(43) Date of publication of application: **06.11.2013**
(21) Application number: 13165440.2
(22) Date of filing: 25.04.2013
(51) Int. Cl.: G06F 3/0488

(54) **Method for inputting touch and touch display apparatus**

(30) Priority: 03.05.2012 KR 20120047008
(71) Applicant: Samsung Electronics Co., Ltd, Gyeonggi-do 443-742 (KR)
(72) Inventor: Choi, Won-yong, Seoul (KR); Kim, Yong-ku, Seoul (KR)
(74) Representative: Robinson, Ian Michael

(57) **Abstract**

A method for touch input and a touch display device using the same are provided. The method for touch input includes: if a touch of an object with respect to the touch display device is detected, determining a contact area of the object touching on the touch display device; determining an input function corresponding to the contact area of the object; and if a touch input by the object is received, executing an input operation based on the determined input function corresponding to the contact area of the object. Accordingly, the user may execute a variety of input operations based on various input functions, by touch inputs using a variety of objects, without having to display an input function change menu.

## Description

### CROSS-REFERENCE TO RELATED APPLICATION

This application claims priority from Korean Patent Application No. 10-2012-0047008, filed on May 3, 2012, in the Korean Intellectual Property Office.

### BACKGROUND

### 1. Field

Methods and apparatuses consistent with exemplary embodiments relate to a method for touch input and a touch display apparatus using the same, and more particularly, to a method for touch input capable of providing a variety of input functions corresponding to a contact area of an object touching on a touch display apparatus, and a display apparatus using the same.

### 2. Description of the Related Art

A touch input has been implemented in not only portable devices including small-sized displays but also wide display devices such as an electronic blackboard having a wide screen display. A touch input applicable to display devices may be realized by a method of utilizing touch sensing device such as a camera, an infrared rays (IR) method, resistive or capacitive method, or a digital pen method which photographs a pattern on a touch screen to detect a location of a touch.

A user may want a touch input that can provide a variety of input functions in addition to a general input function in which a simple line is displayed according to touch by the user.

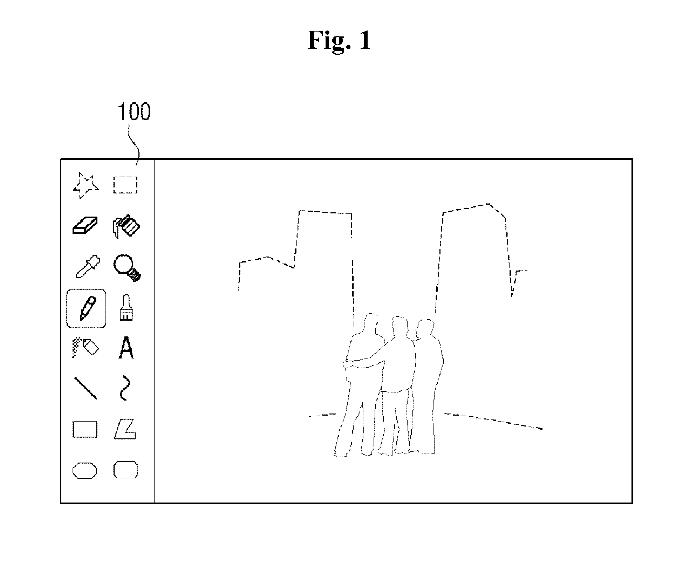

An example of a related art method for providing various input functions is illustrated in FIG. 1, in which a separate input function change menu 100 is displayed on a display device to implement a variety of input functions.

However, in order to change an input function through the separate input function change menu 100 as in the related art method, a user has to display the input function change menu 100 and input corresponding selections thereon when the user wants to change the input function.

Accordingly, a method for providing a variety of input functions without displaying a separate input function change menu on a display device is needed.

### SUMMARY

According to the present invention there is provided an apparatus and method as set forth in the appended claims. Other features of the invention will be apparent from the dependent claims, and the description which follows. One or more exemplary embodiments may overcome the above disadvantages and other disadvantages not described above. However, it is understood that one or more exemplary embodiments are not required to overcome the disadvantages described above, and may not overcome any of the problems described above.

One or more exemplary embodiments provide a method of touch input and a touch display device using the same, in which a contact area of an object on the touch display device is determined and an input function corresponding to the contact area is provided so that input operations are implemented in accordance with a variety of input functions.

According to an aspect of an exemplary embodiment, there is provided a method for touch input of a touch display device, the method including: if a touch of an object on the touch display device is detected, determining a contact area of the object touching on the touch display device; determining an input function corresponding to the contact area of the object; and if a touch input by the object is received, executing an input operation based on the determined input function corresponding to the contact area of the object.

The determining of the contact area may include determining at least one of a size and a shape of the contact area of the object, and the determining of the input function may include determining the input function corresponding to the contact area of the object using the at least one of the size and the shape of the contact area of the object.

The input function may include at least one of a touch input function, a line input function, a curve input function, a figure input function, an eraser input function, an airbrush input function, a color change function, a color filling function, and a text input window generating function.

The method may further include displaying a user interface (UI) to set an input function corresponding to the contact area of the object, matching the input function set by the UI with the contact area of the object, and storing the same.

The input function corresponding to the contact area of the object may be set in advance during manufacturing, e.g., at the factory.

The method may further include outputting a message to guide the input function corresponding to the contact area of the object.

If a plurality of objects are detected on the touch display device, the determining of the input function may include determining a respective one of the input functions which respectively correspond to the contact areas of the plurality of objects, and if the touch input by the plurality of objects is received, the executing may include concurrently executing the input operations based on the determined input functions corresponding to the contact areas of the plurality of objects.

The touch display device may be an electronic blackboard, and the object for touch input on the touch display device may be a digital touch input pen.

According to an aspect of another exemplary embodiment, there is provided a touch display device, the touch display device including: a touch screen which receives a touch of an object; and a control unit which detects the touch of the object on the touch screen, determines a contact area of the object touching on the touch screen, determines an input function corresponding to the contact area of the object, and if a touch input by the object is received, executes an input operation based on the determined input function corresponding to the contact area of the object.

The control unit may determine at least one of a size and a shape of the contact area of the object and determine the input function corresponding to the contact area of the object.

The input function may include at least one of a touch input function, a line input function, a curve input function, a figure input function, an eraser input function, an airbrush input function, a color change function, a color filling function, and a text input window generating function.

The touch display device may further include a storage unit, and the control unit may control the touch screen to display a user interface (UI) to set an input function corresponding to the contact area of the object, match the input function set by the UI with the contact area of the object, and store the same at the storage unit.

The input function corresponding to the contact area of the object may be set in advance during manufacturing, e.g., at the factory.

The control unit may output a message to guide the input function corresponding to the contact area of the object.

If a plurality of objects are detected on the touch display device, the control unit may determine a respective one of the input functions which respectively correspond to the contact areas of the plurality of objects, and if the touch input by the plurality of objects is received, concurrently execute the input operations based on the determined input functions corresponding to the contact areas of the plurality of objects.

The touch display device may be an electronic blackboard, and the object for touch input on the touch display device may be a digital touch input pen.

### BRIEF DESCRIPTION OF THE DRAWINGS

The above and/or other aspects will be more apparent by describing certain exemplary embodiments with reference to the accompanying drawings, in which:

FIG. 1 is a view illustrating a related art input function change menu;

FIG. 2 is a block diagram of a touch display device according to an exemplary embodiment;

FIG. 3 is a view illustrating a user interface (UI) to set an input function corresponding to a contact area of an object, according to an exemplary embodiment;

FIG. 4 is a view illustrating a user interface (UI) to guide an input function corresponding to a contact area of an object, according to an exemplary embodiment; and

FIG. 5 is a flowchart to explain a method of touch input of a touch display device, according to an exemplary embodiment.

### DETAILED DESCRIPTION OF EXEMPLARY EMBODIMENTS

Certain exemplary embodiments will be described in greater detail with reference to the accompanying drawings.

In the following description, same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

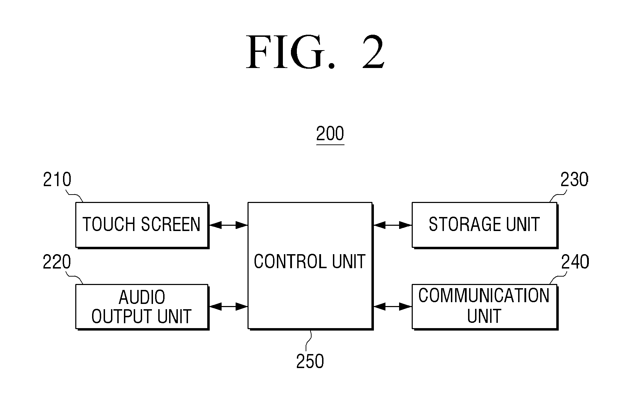

FIG. 2 is a block diagram of a touch display device 200 according to an exemplary embodiment. Referring to FIG. 2, the touch display device 200 may include a touch screen 210, an audio output unit 220, a storage unit 230, a communication unit 240, and a control unit 250 (e.g., a controller). The touch display device 200 according to an exemplary embodiment may be an electronic blackboard, but not limited thereto. The touch display device 200 may be various display devices such as a TV, a smartphone, a tablet PC, a portable media player (PMP), or a personal digital assistant (PDA).

The touch screen 210 displays image data and receives a touch. The touch screen 210 includes a screen unit (not illustrated) to display the image data and a touch panel (not illustrated) to receive the touch.

To be specific, the screen unit may display image data under a control of the control unit 250. The image data may be one of: image data received from an external base station or a server; image data inputted through an external input terminal; image data stored at the storage unit 230; and image data inputted through touch panel. The screen unit may be implemented as a liquid crystal display (LCD). In this case, the screen unit may include a LCD control unit, a memory to store display data, a LCD display device, or the like. However, an exemplary embodiment is not limited to the above examples only, and may display the image data in other manners.

The touch panel is overlapped on the LCD of the screen unit so that a user can make touch input while viewing the data displayed on the screen unit. The touch input applicable to the touch panel may be realized by a method of utilizing touch sensing device such as a camera, an infrared rays (IR) method, resistive or capacitive method, or a digital pen method which photographs a pattern on the touch screen to detect a touched location.

The touch panel may detect a touch by an object (e.g., digital pen) and transmit information about the detection of the object to the control unit 250.

The audio output unit 220 may output audio data under a control of the control unit 250. The audio output unit 220 may output an audio message which guides input function corresponding to the contact area of the object under the control of the control unit 250.

Meanwhile, the audio output unit 220 may be implemented as a speaker, but not limited thereto. In another example, the audio output unit 220 may be implemented as a terminal to transmit an audio signal to an external device.

The storage unit 230 may store programs and data to drive the touch display device 200. Further, the storage unit 230 may include a database which matches and stores a contact area of the object and the corresponding input function.

The database to match and store the contact area of the object and the corresponding input function may be stored in the storage unit 230 in advance during manufacturing, e.g., at the factory. However, it is understood that one or more other exemplary embodiments are not limited thereto. For example, according to another exemplary embodiment, the database may be updated by the user's input.

The communication unit 240 communicates with an external device. To be specific, if an object is a digital pen for a touch input, the communication unit 240 may communicate with the digital pen. The communication unit 240 may receive information about a point of touch contacted by the digital pen from the digital pen.

The control unit 250 controls an overall operation of the touch display device 200 according to a touch inputted through the touch screen 210.

To be specific, if a touch of the object on the touch screen 210 is detected, the control unit 250 determines a contact area of the object touching on the touch screen 210, determines an input function corresponding to the determined contact area of the object, and if a touch input of the object is received, executes an input operation using the determined input function corresponding to the contact area of the object.

To be specific, the control unit 250 detects a touch of the object on the touch screen 210. The object is used to input a touch on the touch screen 210, and may be a digital pen in one embodiment. However, it is understood that one or more other exemplary embodiments are not limited thereto. For example, according to another exemplary embodiment, the object may be a finger, a stick, or a pencil.

If a touch of the object on the touch screen 210 is detected, the control unit 250 determines a contact area of the object. The control unit 250 may determine at least one of a shape and a size of the contact area of the touching object.

For example, the control unit 250 may determine if the contact area of the touching object is a square, a circular or a triangular shape. Further, the control unit 250 may determine if the contact area of the touching object is 1 mm², 3 mm² or 5 mm². However, the shape or the size of the contact area of the object may be varied depending on embodiments.

The control unit 250 then determines an input function corresponding to the contact area of the touching object. Herein, the 'input function' refers to input operations executed on the touch display device 200 according to the object touching thereon. For example, the input function may include the following:

**[Table 1]**

| Input functions | Explanations |
|---|---|
| 1. Touch input function | Drawing a line in response to the touch of the object |
| 2. Line input function | Drawing a line by connecting two points touched by the object |
| 3. Curve input function | Drawing a line by connecting two points touched by the objects, touching one point |
| | of the line, dragging the point, and drawing a curve |
| 4. Figure input function | Dragging the touch point and drawing the predetermined figure such as a square, a circle, or an oval. |
| 5. Eraser input function | Deleting contents expressed on the touch point |
| 6. Air brush input function | Spraying on the touch point |
| 7. Color changing input function | Expressing one of the colors on the touch point |
| 8. Color filling input function | Touching a predetermined area, and filling the color in the predetermined area |
| 9. Text input window generating function | Generating an input window for text input |

However, the above-listed input functions are only examples and other input functions may be implemented according to another exemplary embodiment.

The control unit 250 may determine an input function corresponding to the contact area of the object by using one of a shape and a size of the contact area of the touching object. To be specific, the control unit 250 may utilize the database, which matches and stores the contact area of the object and the input function, to determine an input function corresponding to the contact area of the object.

**[Table 2]**

| | 1 mm² | 3 mm² | 5 mm² |
|---|---|---|---|
| Square | Touch input function | Line input function | Curve input function |
| Circle | Figure input function | Eraser input function | Air brush function |
| Triangle | Red color input function | Color filling function | Text inputting window function |

For example, if the contact area of the object is a square shape and is 3 mm² in size, the control unit 250 may determine that the line input function is the corresponding input function to the contact area of the object. In another exemplary embodiment, if the contact area of the object is a circle and 3 mm² in size, the control unit 250 may determine the erase input function as the corresponding input function to the contact area of the object.

Meanwhile, the database, which matches and stores a contact area of the object and input function, may be stored in the storage unit 230 in advance during manufacturing, e.g., at the factory. However, it is understood that one or more other exemplary embodiments are not limited thereto. For example, according to another exemplary embodiment, the database may be updated according to the user's setting.

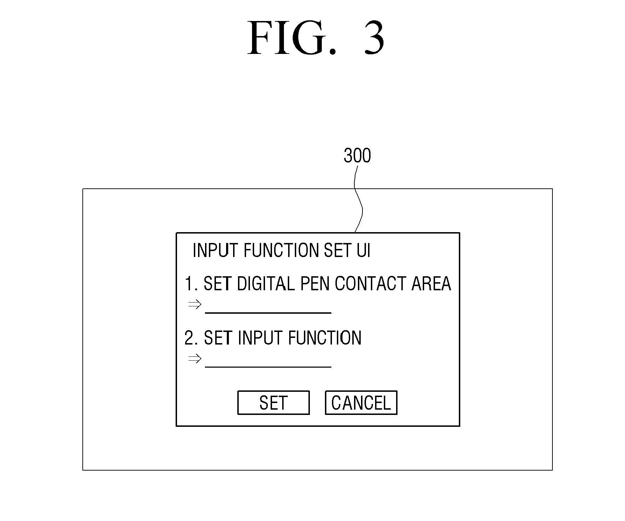

For example, referring to FIG. 3, the control unit 250 may display a user interface (UI) 310 to set an input function corresponding to the contact area of the object according to the user's command. The control unit 250 may match and store in the database, the contact area of the object inputted through the UI 300 and the corresponding input function.

Although the size and the shape of the contact area of the object are determined together to determine an input function corresponding to the contact area of the object, it is understood that one or more other exemplary embodiments are not limited thereto. For example, according to another exemplary embodiment, only one of the size and the shape of the contact area of the object may be used to determine the input function corresponding to the contact area of the object.

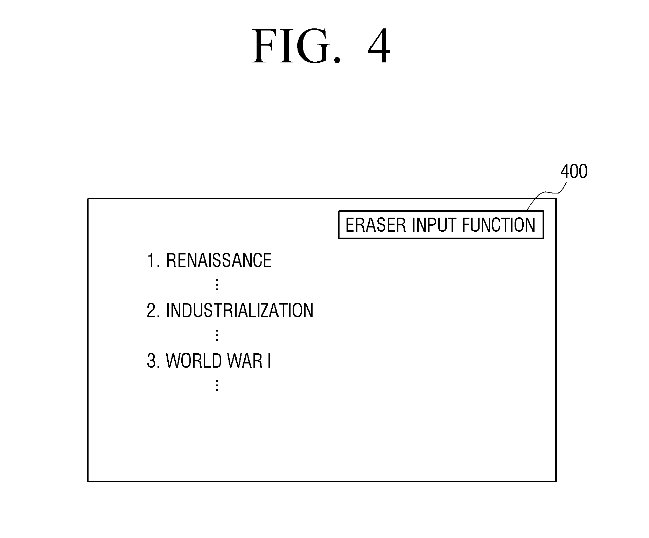

If an input function corresponding to the contact area of the object is determined, the control unit 250 may output a message to guide the input function corresponding to the contact area of the object. Referring to FIG. 4, the control unit 250 may generate a user interface (UI) 400 to guide an input function corresponding to the contact area of the object and display the generated UI 400. Further, the control unit 250 may control the audio output unit 240 to output an audio message to guide an input function corresponding to the contact area of the object.

If a touch input by the object is received, the control unit 250 executes an input operation using the determined input function corresponding to the contact area of the object. To be specific, if an input function corresponding to the contact area of the object is determined and then a touch input of the object is received, the control unit 250 determines an input operation using the determined input function. For example, if it is determined that the input function corresponding to the contact area of the object is a line input function, according to touching on two points on the touch screen 210, the control unit 250 may execute a line drawing operation by connecting the two touching points. Further, if determining that the erase input function corresponds to the contact area of the object, in response to touching on the touch screen 210, the control unit 250 may execute a deleting operation by deleting the content displayed on the point touched by the object.

If the control unit 250 detects a touching of a second object while implementing an input function using a first object, the control unit 250 may determine an input function corresponding to the touching area of the second object and execute the determined input operation accordingly.

Further, if touching of a plurality of objects are detected on the touch screen 210, the control unit 250 may determine a respective one of the input functions which respectively correspond to the contact areas of the plurality of objects, and in response to touch inputs by the plurality of objects, execute input operations concurrently, by using the respective input functions which respectively correspond to the contact areas of the plurality of objects. For example, if a first object and a second object are detected concurrently, the control unit 250 determines input functions corresponding to contact areas of the first object and the second object, respectively. If a line input function corresponds to the contact area of the first object and an erase input function corresponds to the contact area of the second object, in response to touching by the first object and the second object, the control unit 250 may execute the line input function by connecting two points touched by the first object, and execute the erase input function by deleting the content displayed on the point touched by the second object, concurrently.

Accordingly, the user is able to execute input operations using a variety of input functions by inputting touches with a plurality of objects, and does not have to display an input function change menu to do the same.

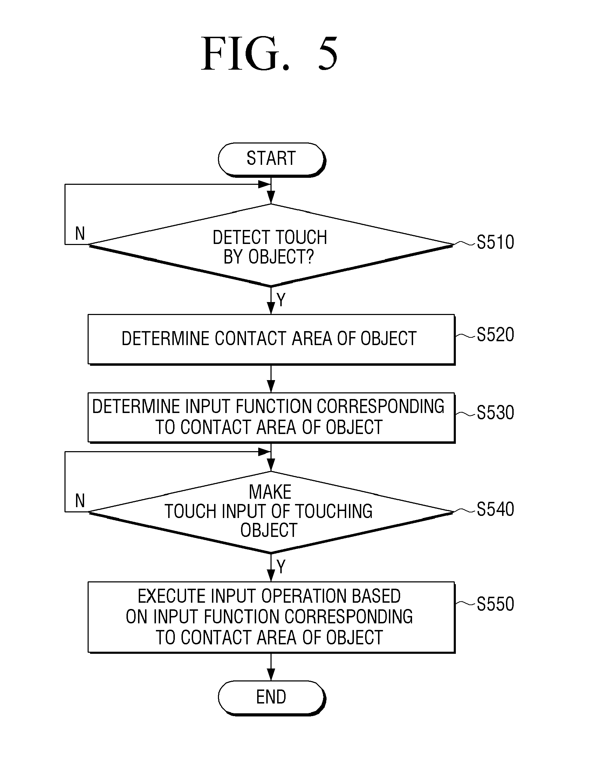

A method of touch input of the touch display device 200 will be explained below with reference to FIG. 5.

The touch display device 200 detects a touch of the object (operation S510). The object is employed to input touch to the touch display device 200, and a digital pen may be an example of the object. However, it is understood that one or more other exemplary embodiments are not limited thereto. For example, according to another exemplary embodiment, the object may be a finger, a stick, a pencil, or the like.

If a touch of the object is detected (operation S510-Y), the touch display device 200 determines a contact area of the object (operation S520). To be specific, the touch display device 200 may determine at least one of a shape and a size of the contact area of the object.

The touch display device 200 determines an input function corresponding to the contact area of the object (operation S530). To be specific, the touch display device 200 may search the database stored in the storage unit 230 using at least one of the shape and the size of the determined contact area of the object, and determine an input function corresponding to the contact area of the object. The database stored in the storage unit 230 may match and store the contact area of the object and the corresponding input function during manufacturing, e.g., at the factory. Further, referring to FIG. 3, the database stored in the storage unit 230 may newly match and store the contact area of the object and the corresponding input function using the UI 310.

The touch display device 200 determines whether the touch input is received on the touch screen 210 using the object (operation S540).

If it is determined that the touch input is received (operation S540-Y), the touch display device 200 executes an input operation using the determined input function corresponding to the contact area of the object (operation S550). For example, if it is determined that an erase input function corresponds to the contact area of the object, in response to the touch input, the touch display device 200 may execute an erasing operation by deleting the content displayed on the point touched by the object.

By implementing the foregoing method of touch input, the user may execute input operations according to a variety of input functions using various objects to make touch input, without having to display an input function change menu.

Further, since the shape and the size of the contact area of the object are used, it is not necessary to separately employ a circuit device for the object to enable the touch display device 200 to determine the type of the object. Further, since different input functions are provided by varying a contact area of a single object, a plurality of input functions may be executed using only one object.

A program code to execute the above-mentioned methods may be stored in a non-transitory computer readable medium. The non-transitory computer readable medium includes CD, DVD, hard disk, Blu-ray disk, USB memory, memory card, or CD-ROM, etc., which can be readable by a device. Moreover, it is understood that in exemplary embodiments, one or more units of the above-described device 200 can include circuitry, a processor, a microprocessor, etc., and may execute a computer program stored in a computer-readable medium.

The foregoing exemplary embodiments and advantages are merely exemplary and are not to be construed as limiting the present disclosure. The present disclosure can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for touch input of a touch display device, the method comprising:
if a touch of an object with respect to the touch display device is detected, determining a contact area of the object touching on the touch display device;
determining an input function corresponding to the determined contact area of the object; and
if a touch input by the object is received, executing an input operation based on the determined input function corresponding to the contact area of the object.

2. The method of claim 1, wherein:
the determining of the contact area comprises determining at least one of a size and a shape of the contact area of the object, and
the determining of the input function comprises determining the input function corresponding to the contact area of the object using the at least one of the size and the shape of the contact area of the object.

3. The method of claim 1 or 2, wherein the input function comprises at least one of a touch input function, a line input function, a curve input function, a figure input function, an eraser input function, an airbrush input function, a color change function, a color filling function, and a text input window generating function.

4. The method of any of claims 1 to 3, further comprising:
displaying a user interface (UI) to set an input function corresponding to the contact area of the object; and
matching the input function set through the UI with the contact area of the object and storing information on the matching.

5. The method of any of claims 1 to 4, wherein the input function corresponding to the contact area of the object is set in advance during manufacturing.

6. The method of any of claims 1 to 5, wherein the input function corresponding to the contact area of the object is set by a user.

7. The method of any of claims 1 to 6, further comprising outputting a message to guide the input function corresponding to the contact area of the object.

8. The method of claim 7, wherein the outputting the message comprises displaying a user interface (UI) to guide the input function corresponding to the contact area of the object.

9. The method of claim 7 or 8, wherein the outputting the message comprises outputting an audio message to guide the input function corresponding to the contact area of the object.

10. The method of any of claims 1 to 9, wherein, if a plurality of objects are detected on the touch display device, the determining of the input function comprises determining input functions corresponding to the respective contact areas of the plurality of objects, and
if the touch input by the plurality of objects is received, the executing comprises concurrently executing the input operations based on the determined input functions corresponding to the contact areas of the plurality of objects.

11. The method of any of claims 1 to 10, wherein the touch display device is an electronic blackboard, and the object is a digital touch input pen.

12. A touch display device, comprising:
a touch screen which receives a touch of an object; and
a controller which detects the received touch of the object on the touch screen, determines a contact area of the object touching on the touch screen, determines an input function corresponding to the determined contact area of the object, and if a touch input by the object is received, executes an input operation based on the determined input function corresponding to the contact area of the object.

13. The touch display device of claim 12, wherein the controller determines at least one of a size and a shape of the contact area of the object, and determines the input function corresponding to the contact area of the object using the at least one of the size and the shape of the contact area of the object.

14. The touch display device of claim 12, wherein the input function comprises at least one of a touch input function, a line input function, a curve input function, a figure input function, an eraser input function, an airbrush input function, a color change function, a color filling function, and a text input window generating function.

15. The touch display device of claim 12, further comprising:
a storage unit,
wherein the controller controls the touch screen to display a user interface (UI) to set an input function corresponding to the contact area of the object, matches the input function set by the UI with the contact area of the object, and stores information on the matching in the storage unit.
